# FASCICULE DE BREVET EUROPEEN

(11) **EP 2 239 358 B1**
(45) Date de publication et mention de la délivrance du brevet: **21.03.2012**
(21) Numéro de dépôt: 10159458.8
(22) Date de dépôt: 09.04.2010
(51) Int. Cl.: D03C 1/00, F16B 39/32

(54) **Dispositif d'assemblage, ensemble de deux pièces assemblées par un tel dispositif et lame de machine de formation de la foule comprenant un tel ensemble**
Montagevorrichtung, Komplex aus zwei zusammengesetzten Teilen mit Hilfe dieser Vorrichtung und Webschaft einer Schaftmaschine zur Fächerbildung, die einen solchen Komplex umfasst
Assembly device, set of two parts assembled by such a device and warp frame of a machine for forming the shed including such a set

(30) Priorité: 10.04.2009 FR 0952402
(43) Date de publication de la demande: 13.10.2010
(73) Titulaire: Staubli Faverges, 74210 Faverges (FR)
(72) Inventeur: Nocenti, Robert, 74210 Marlens (FR)
(74) Mandataire: Myon, Gérard Jean-Pierre

(56) Documents cités:
- WO-A-2006/069497
- DE-A1- 3 327 587
- FR-A- 2 899 602
- FR-A- 2 913 077
- JP-U- 59 088 508
- US-A- 5 606 753
- US-A1- 2005 025 604

## Description

Dans le domaine de la formation de la foule, il est nécessaire d'assembler certaines pièces constitutives des lames d'une machine au cours de sa fabrication. Une lame est soumise à des accélérations et des vibrations importantes tout en devant respecter un encombrement limité lié à la division du métier. Par exemple, FR-A-2 899 602 montre une ratière rotative dans laquelle un capot est rapporté sur un excentrique et maintient en place des organes de sélection. Ce capot est immobilisé sur l'excentrique au moyen de vis. Compte tenu des vibrations et des accélérations précitées, ces vis sont susceptibles de se débloquer progressivement, au cours de l'utilisation de la ratière. De la même façon, des pattes pourvues de dents destinées à coopérer avec un bras de blocage sont immobilisées sur l'excentrique au moyen de vis qui peuvent se desserrer en cours d'utilisation.

L'assemblage par vis est toutefois avantageux par rapport à un assemblage par rivets, dans la mesure où il n'est pas nécessaire d'utiliser une installation spécifique de type presse. Par ailleurs, l'utilisation de frein-filet est contrindiquée car le démontage de la machine de formation de la foule induirait la détérioration des pièces assemblées. En outre, le frein-filet est susceptible de s'altérer au cours du temps, compte tenu de l'environnement de travail de la machine, en particulier car certaines pièces sont disposées dans un bain d'huile et/ou travaillent à des températures relativement élevées.

Dans un domaine autre que la formation de la foule, il est connu de US-A-5 606 753 de réaliser un dispositif d'assemblage au moyen d'une vis à tête hexagonale associée à une rondelle hexagonale, qui forme un siège et qui est pourvue de pattes s'étendant radialement vers l'extérieur par rapport à des cloisons latérales de la rondelle, ce qui induit un encombrement radial relativement important de ce dispositif et limite la longueur de flexion des pattes. Les pattes subissent des contraintes de flexion importantes lors du serrage de la vis. La vis est manoeuvrée au moyen d'une clef qui est susceptible d'endommager les pattes. Ce dispositif n'est donc pas adapté à l'assemblage de deux pièces constitutives d'une machine de formation de la foule.

C'est à ces inconvénients qu'entend plus particulièrement remédier l'invention qui propose un nouveau dispositif d'assemblage plus fiable et plus facile à mettre en oeuvre que ceux de l'état de la technique.

A cet effet, l'invention concerne un dispositif d'assemblage d'au moins deux pièces constitutives d'une machine de formation de la foule, ce dispositif comprenant une vis pourvue d'une tige filetée et d'une tête comprenant au moins une paire de deux bords latéraux adjacents formant entre eux un angle non plat. Ce dispositif est caractérisé en ce que :
- la tête est pourvue d'une empreinte creuse de réception d'un outil d'entraînement de la vis en rotation
- une bague de blocage est montée autour de la vis et comprend une partie annulaire en appui contre une face de la tête orientée vers la tige, ainsi qu'au moins une patte dont une première partie est en regard d'un premier bord de la paire de bords, selon une direction radiale par rapport à un axe central de la vis, et dont une deuxième partie est en regard du deuxième bord de la paire de bord, selon une direction radiale par rapport à l'axe central de la vis, cette deuxième partie de la patte étant apte à se rapprocher ou à s'éloigner du deuxième bord, grâce à une déformation élastique de la patte.

Grâce à l'invention, il est possible de manoeuvrer la tête de la vis au moyen de l'empreinte, c'est-à-dire sans interférer avec le bord extérieur de cette tête qui peut être utilisé pour interagir, sur une grande partie de sa hauteur axiale, avec la ou les pattes élastiquement déformables de la bague de blocage. Comme la ou chaque patte est en appui sur le premier bord d'une paire de bords et peut se rapprocher plus ou moins du deuxième bord, elle peut, lorsque le dispositif d'assemblage est utilisé pour solidariser deux pièces, ne pas faire saillie radialement de façon significative à l'extérieur d'un cercle dans lequel est inscrite la forme de la tête et qui tangente la périphérie de cette tête, ce qui confère une bonne compacité radiale au dispositif de l'invention.

Selon des aspects avantageux mais non obligatoires de l'invention, un tel dispositif d'assemblage peut incorporer une ou plusieurs des caractéristiques suivantes, prises dans toute combinaison techniquement admissible :
- La hauteur axiale de la patte, prise parallèlement à l'axe central de la vis, a une valeur supérieure à 50%, de préférence supérieure à 70%, de la valeur de la hauteur axiale de la tête prise parallèlement à l'axe central de la vis.
- La tête est pourvue d'au moins deux paires de deux bords adjacents disposés à l'intérieur du cercle et formant entre eux un angle non plat, alors que la bague de blocage est pourvue d'au moins deux pattes élastiquement déformables aptes à venir respectivement en appui, par leurs premières parties, contre des premiers bords des paires de bords et dont les deuxièmes parties sont disposées radialement en regard des deuxièmes bords des paires de bords et aptes à se rapprocher ou à s'éloigner de ces deuxièmes bords par déformation élastique des pattes. Dans ce cas, les deux pattes ou deux des pattes ont avantageusement des longueurs différentes.
- La première partie de la patte ou de chaque patte est en appui contre le premier bord de la ou d'une des paire(s) de bords.
- Un épaulement est ménagé autour de la tige, sur le côté de la tête tourné vers la tige et la bague de blocage est montée autour de cet épaulement.
- La première partie de chaque patte de la bague de blocage forme avec une face de la partie annulaire tournée vers cette patte, un angle inférieur à 90°. Ceci permet de clipser la bague de blocage sur la tête de la vis et facilite la mise en place de la vis équipée de la bague de blocage.
- Le premier bord de chaque paire de bords est en dépouille et converge vers l'axe central de la vis, à l'opposé de la tige.
- L'extrémité libre de la ou chaque patte est pourvue d'un chanfrein, du côté de cette extrémité tournée vers la partie annulaire. Ceci facilite la mise en place de la vis équipée de la bague de blocage dans un lamage.

L'invention concerne également un ensemble d'au moins deux pièces assemblées par un dispositif tel que mentionné ci-dessus dans lequel l'une des pièces est équipée d'un lamage de réception de la tête et de la bague de blocage, alors que le bord périphérique de ce lamage est pourvu de crans recevant en appui une patte élastiquement déformable.

De façon avantageuse, une première face de chaque cran est apte à recevoir en appui bloquant un bord libre de la ou de chaque patte, lorsque la vis est tournée dans un sens de dévissage par rapport à la pièce équipée du lamage.

Enfin, l'invention concerne une lame de machine de formation de la foule qui comprend au moins un ensemble de pièces assemblées tel que mentionné ci-dessus.

Une telle lame est solide, tout en étant démontable et en ne nécessitant pas l'emploi d'une presse de rivetage spécifique lors de sa fabrication. Une telle lame peut avoir une épaisseur compatible avec la division du métier à tisser.

L'invention sera mieux comprise et d'autres avantages de celle-ci apparaîtront plus clairement à la lumière de la description qui va suivre d'un mode de réalisation d'un dispositif d'assemblage, d'un ensemble de pièces et d'une lame de machine de formation de la foule conformes à son principe, donnée uniquement à titre d'exemple et faite en référence au dessins annexés dans lesquels :
- la figure 1 est une vue de face partielle d'une lame de ratière rotative incorporant l'invention,
- la figure 2 est une vue de perspective éclatée de la partie de la lame correspondant au détail II à la figure 1,
- la figure 3 est une vue d'extrémité d'une vis utilisée dans la lame des figures 1 et 2,
- la figure 4 est une coupe de la vis, selon la ligne IV-IV à la figure 3,
- la figure 5 est une vue à plus grande échelle du détail V à la figure 1,
- la figure 6 est une coupe selon la ligne VI-VI à la figure 5,
- la figure 7 est une vue en perspective d'un dispositif d'assemblage conforme à l'invention utilisé sur la lame des figures 1 à 5 et
- la figure 8 est une vue en perspective éclatée, selon un autre angle et à une autre échelle, du dispositif de la figure 7.

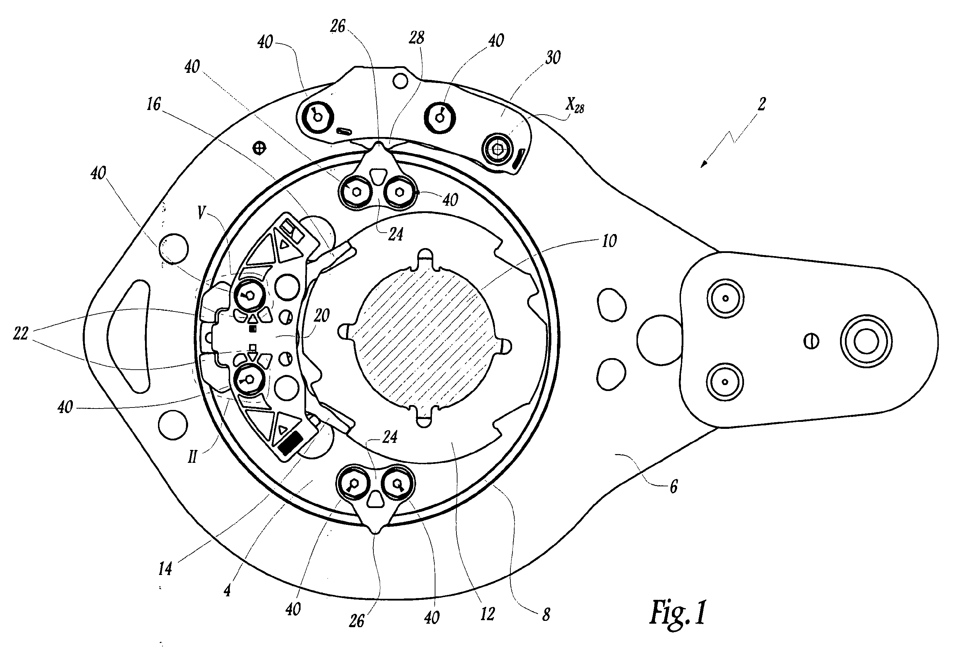

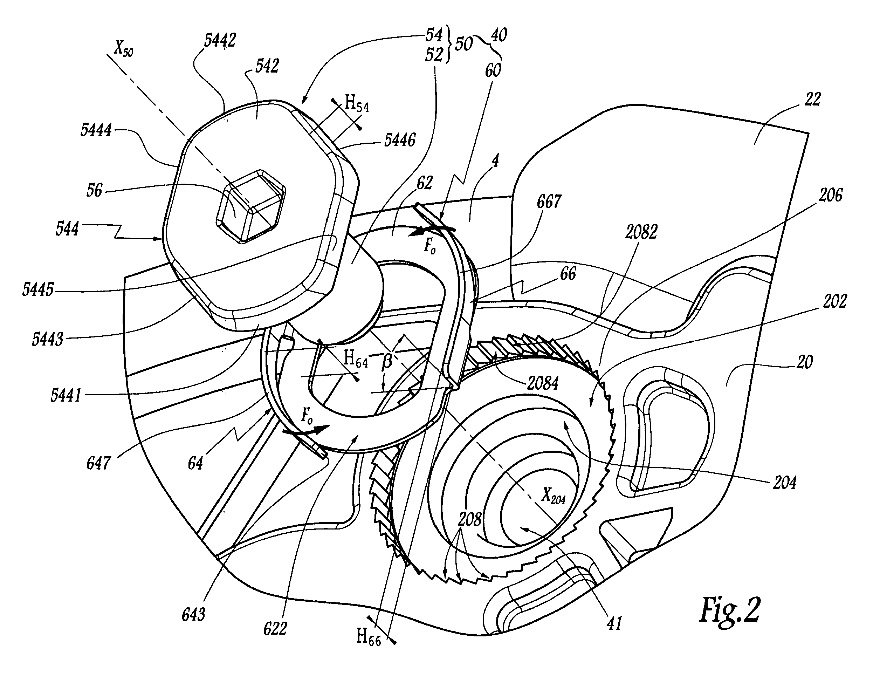

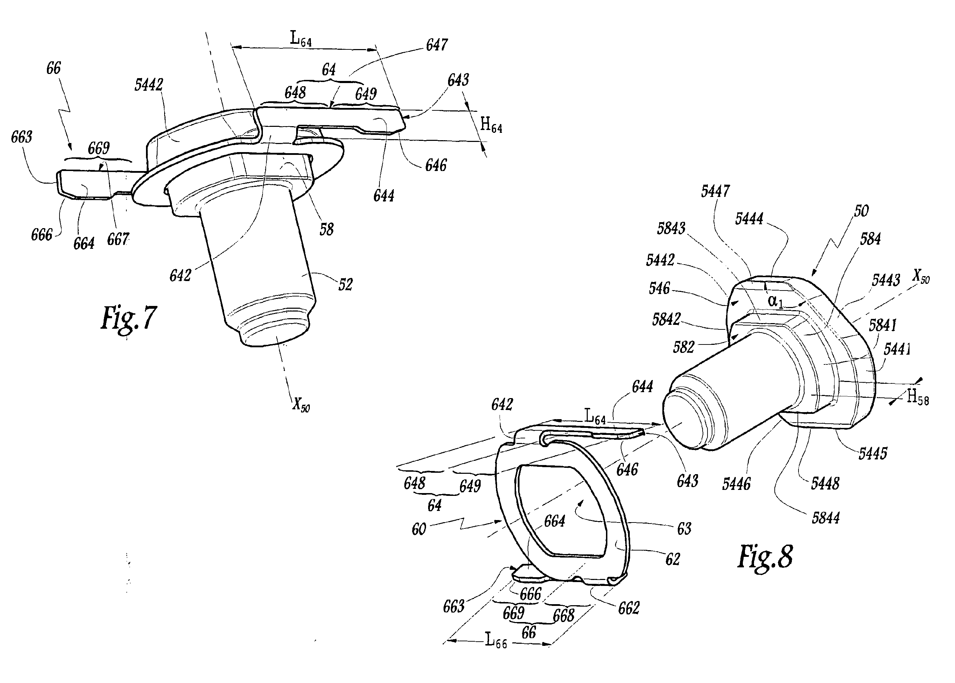

La partie de lame 2 de ratière représentée à la figure 1 comprend un excentrique 4 sur lequel est montée folle l'ouverture d'une bielle 6 oscillante, avec interposition d'un roulement à billes 8. La bielle 6 est destinée à être reliée, par des moyens non représentés incluant un bras pivotant, à un mécanisme de tirage qui attaque un cadre de lisses. Un arbre principal 10 animé d'un mouvement de rotation intermittent, avec arrêt tous les demi-tours, est solidaire en rotation d'un disque d'entraînement 12. Deux verrous 14 et 16, commandés de façon connue en soi, sont prévus pour solidariser sélectivement l'excentrique 4 et le disque 12, en fonction du mouvement à imprimer au cadre de lisses. Les verrous 14 et 16 sont retenus sur l'excentrique 4 au moyen d'un capot 20 en matière plastique qui est plaqué contre l'excentrique 4 par deux dispositifs d'assemblage 40 représentés plus en détail aux figures 2 à 7. Deux pièces de guidage 22, couramment dénommées « rampes », sont interposées entre le capot 20 et l'excentrique 4 et dépassent radialement à l'extérieur du capot, de telle sorte qu'elles peuvent exercer sur le bec d'un levier oscillant non représenté et commandé par un dispositif de lisage, un effort d'écartement radial, d'une façon analogue à ce qui est mentionné dans FR-A-2 899 602.

Chaque dispositif d'assemblage 40 comprend une vis 50 dont on note 52 la tige filetée et 54 la tête. Cette tête 54 est pourvue, sur sa face 542 opposée à la tige 52, d'une empreinte creuse hexagonale 56 qui permet, au moyen d'un outil adapté de type clef mâle à six pans, d'entraîner la vis 50 en rotation autour de son axe longitudinal X₅₀ qui est l'axe central de la tige 52.

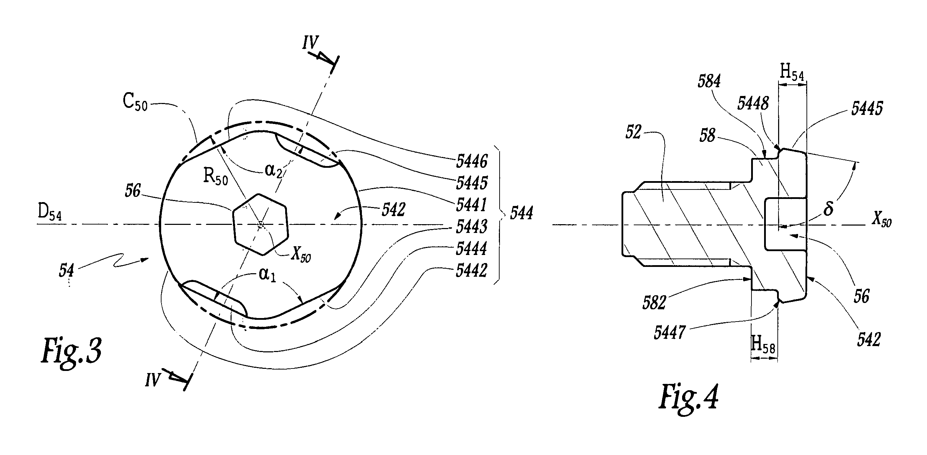

Comme il ressort plus particulièrement de la figure 3, la tête 54 a, en section transversale perpendiculaire à l'axe X₅₀, une géométrie définie par sa périphérie 544 qui est inscrite dans un cercle C₅₀ centré sur l'axe X₅₀ et de rayon R₅₀ égal à la distance maximale entre la périphérie 544 et l'axe X₅₀. Le cercle C₅₀ est donc tangent à la périphérie 544 et centré sur l'axe X₅₀. La périphérie 544 se décompose en plusieurs bords latéraux unitaires, dont deux bords 5441 et 5442 en arc de cercle, centrés sur l'axe X₅₀ et de rayon R₅₀. La périphérie 544 comprend également deux paires de bords latéraux rectilignes 5443, 5444, 5445 et 5446. Les bords 5443 et 5444 forment une paire de bords adjacents disposés entre les bords 5441 et 5442, alors que les bords 5445 et 5446 forment une paire de bords adjacents disposés entre les bords 5441 et 5442, à l'opposé des bords 5443 et 5444 par rapport aux bords 5441 et 5442. En d'autres termes, la tête 54 est symétrique par rapport à une droite D₅₄ s'étendant radialement par rapport à l'axe X₅₀ et passant par les milieux respectifs des bords 5441 et 5442.

Les bords 5443 et 5444 forment entre eux un angle α₁, alors que les bords 5445 et 5446 forment entre eux un angle α₂. Les angles α₁ et α₂ sont des angles non plats, en ce sens que leur valeur est différente de 0° ou 180°. En pratique, ils ont la même valeur, en l'occurrence 130°. Ces angles α₁ et α₂ pourraient toutefois avoir des valeurs différentes.

Le rayon de raccordement entre les bords 5443 et 5444, d'une part, et entre les bords 5446 et 5445, d'autre part est de l'ordre de 15 mm, pour une vis dont la tête a un rayon maximal R₅₀ de 20 mm.

L'invention est également applicable au cas où les bords 5443 à 5446 ne sont pas rectilignes, pour autant que les directions moyennes respectives de deux bords adjacents forment entre elles un angle non plat.

La vis 50 est également pourvue d'un épaulement 58 qui s'étend autour de la tige 52, axialement entre cette tige 52 et la tête 54. En section transversale, l'épaulement 58 a une périphérie 584 qui comprend deux bords unitaires en arc de cercle 5841 et 5842 et deux bords unitaires parallèles et rectilignes 5843 et 5844. Les bords 5841 et 5842 sont centrés sur l'axe X₅₀. Les bords 5843 et 5844 sont respectivement parallèles aux bords 5444 et 5445.

Le dispositif d'assemblage 40 comprend également une bague de blocage 60 réalisée en acier à ressort et qui comprend une partie annulaire 62 plane définissant une ouverture centrale 63 globalement complémentaire des bords 5841 à 5844 de l'épaulement 58, de sorte que la bague 60 peut être disposée autour de l'épaulement 58, en appui sur la face 546 de la tête 54 tournée vers la tige 52, en étant bloquée en rotation par rapport à la vis 50. La bague 60 comprend également deux pattes 64 et 66 qui sont monobloc avec la partie 62 et reliées à celle-ci par deux parties courbées 642, respectivement 662, de telle sorte que chaque patte 64 et 66 fait avec la face 622 de la bague 60 destinée à venir en appui contre la face 546 un angle β inférieur à 90°, dans l'exemple égal à 80°.

Les pattes 64 et 66 sont planes avant montage de la bague 60 sur la vis 50. Chaque patte 64 et 66 est pourvue, au voisinage de son extrémité libre 644 ou 664 d'un chanfrein 646 ou 666, sur le côté de la patte orienté vers la partie 62.

On note respectivement L₆₄ et L₆₆ la longueur de chacune des pattes 64 et 66. Les valeurs des longueurs L₆₄ et L₆₆ sont différentes l'une de l'autre.

On note H₆₄ la hauteur de la patte 64 prise parallèlement à l'axe X₅₀ en configuration montée de la bague 60 sur la vis 50. Cette hauteur est mesurée entre la face 622 de la partie 62 et le bord 647 de la patte 64 opposé à la partie 62. De la même manière, on note H₆₆ la hauteur axiale, prise parallèlement à l'axe X₅₀ en configuration montée de la bague 60 sur la vis 50, de la patte 66 prise entre la surface 622 et le bord 667 de cette patte opposé à la partie 62.

On note par ailleurs H₅₄ la hauteur axiale de la tête 54, c'est-à-dire la dimension de cette tête prise parallèlement à l'axe X₅₀.

Les valeurs des hauteurs axiales H₆₄ et H₆₆ sont supérieures ou égales à 50% de la valeur de la hauteur axiale H₅₄. En pratique, les hauteurs axiales H₆₄ et H₆₆ représentent entre 70 et 100% de la valeur de la hauteur H₅₄. On peut prévoir que la hauteur H₅₄ est supérieure de 0,1 mm aux hauteurs H₆₄ et H₆₆.

Les bords 5444 et 5445 de la tête 54 sont en dépouille et convergents, à l'opposé de la tige 62. En d'autres termes, les bords unitaires 5444 à 5445 se rapprochent de l'axe X₅₀ en s'éloignant de l'épaulement 58. On note δ l'angle formé entre l'un des bords 5444 et 5445 et la face 546, cet angle étant pris dans la matière de la tête 54. Les valeurs des angles β et δ peuvent être égales. Le fait que les angles β et δ sont inférieurs à 90°, permet d'encliqueter la bague 60 sur la vis 50 par coincement élastique des pattes 64 et 66 autour de la tête 54, plus précisément par appui serré des pattes 64 et 66 sur les bords unitaires 5444 et 5445.

En variante, l'angle δ peut être égal à 90°, c'est-à-dire que les bords 5444 et 5445 ne sont pas en dépouille. Dans ce cas, le fait que l'angle β est inférieur à 90° permet un pincement élastique de la bague 60 sur la tête 54.

Pour faciliter l'encliquetage de la bague 60 sur la vis 50, un chanfrein 5447, respectivement 5448, est ménagé à la jonction des bords unitaires 5444 et 5445 avec la face 546.

Lorsque la bague 60 est montée sur la vis 50, une première partie 648 de la patte 64 est en regard de, selon une direction radiale par rapport à l'axe X₅₀, et en appui contre le bord unitaire 5444, alors qu'une deuxième partie 649 s'étend à distance du bord unitaire 5443. De la même façon, une première partie 668 de la patte 66 s'étend en regard de, selon une direction radiale par rapport à l'axe X₅₀, et en appui contre le bord unitaire 5445, alors qu'une deuxième partie 669 s'étend à distance du bord unitaire 5446.

L'appui des premières parties 648 et 668 des pattes 64 et 66 respectivement contre les bords 5444 et 5445 permet un blocage efficace de la bague 60 sur la vis 50, en rotation autour de l'axe X₅₀.

Les deuxièmes parties 649 et 669 s'étendent respectivement en regard, selon une direction radiale par rapport à l'axe X₅₀, des bords 5443 et 5446, de sorte que ces pattes peuvent se rapprocher ou s'éloigner plus ou moins de ces bords, grâce à une déformation élastique des pattes 64 et 66.

Les extrémités libres respectives 644 et 664 appartiennent aux parties 649 et 669 des pattes 64 et 66 et peuvent donc être plus ou moins rapprochées des bords 5443 et 5446.

On note respectivement 643 ou 663 le bord libre de chacune des pattes 64 ou 66, c'est-à-dire le bord de l'extrémité libre 644 ou 664 qui s'étend perpendiculairement à la partie 62 et qui est le plus éloigné de la partie courbée 642 ou 662.

Lorsque la bague 60 est engagée sur la vis 50, il est possible de visser la vis 50 dans un taraudage 41 prévu à cet effet sur l'excentrique 4, en passant la tige 52 à travers le capot 20 et à travers une rampe 22. Le capot 20 est pourvu d'un lamage 202 dont le fond est pourvu d'un orifice circulaire 204 centré sur un axe X₂₀₄ et dans lequel peut être engagé l'épaulement 58.

En pratique, comme représenté à la figure 1, le capot 20 est pourvu de deux lamages 202 puisque deux dispositifs d'assemblage 40 sont utilisés pour l'immobiliser sur l'excentrique 4.

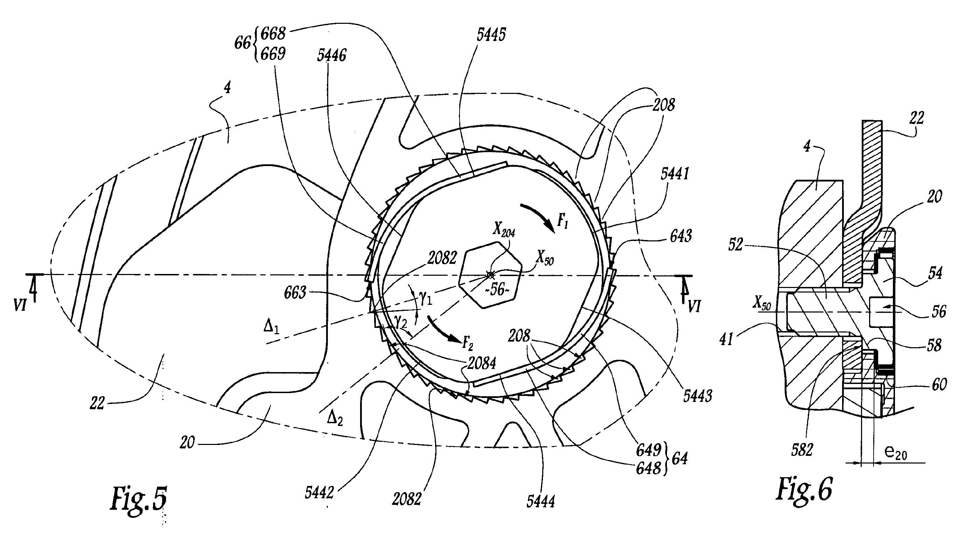

Pour permettre l'introduction de la bague 60 dans le lamage 202, les parties 649 et 669 des pattes 64 et 66 sont déformées élastiquement en direction des bords unitaires 5443 et 5446, c'est-à-dire en direction de l'axe X₅₀, pour rapprocher leurs deuxièmes parties 649 et 669 respectivement des bords 5443 et 5446, comme représenté par les flèches F₀ à la figure 2, et atteindre la configuration représentée aux figures 2 et 5. Les chanfreins 646 et 666 facilitent la mise en place de la bague 60 dans le lamage 202, en glissant sur le sommet des crans 208.

La valeur du rayon de raccordement entre les bords 5443 et 5444, d'une part, 5445 et 5446, d'autre part, facilite la déformation élastique entre les parties 648 et 649, respectivement 668 et 669, des pattes 64 et 66.

Le bord périphérique 206 du lamage 202 est équipé de cinquante crans 208 qui sont régulièrement distribués autour de l'axe X₂₀₄ et inclinés chacun par rapport à une direction radiale par rapport à l'axe X₂₀₄. Plus précisément, chaque cran 208 est défini entre deux surfaces 2082 et 2084 inclinées. On définit comme base d'une surface 2082 sa ligne de jonction avec la surface 2084 adjacente du même cran, radialement sur l'extérieur de cette surface 2082 par rapport à l'axe X₂₀₄. De même, on définit comme base d'une surface 2084 sa ligne de jonction avec la surface 2082 adjacente du même cran, radialement sur l'extérieur de cette surface 2084. En pratique, les bases des surfaces 2082 et 2084 d'un cran 208 sont formées par la même ligne de jonction. La première surface 2082 d'un cran 208 forme, par rapport à une droite radiale Δ₁ passant par sa base, un angle γ₁ dont la valeur est de 10° environ. La deuxième surface 2084 d'un cran 208 forme, avec une droite radiale Δ₂ passant par sa base, un angle γ₂ égal à 80° environ. Le sens d'inclinaison des crans 208 autour de l'axe X₂₀₄ est tel que, lors du vissage de la vis 50 équipée de la bague 60 dans le sens de la flèche F₁ à la figure 5, la bague suit la rotation de la vis et les faces radiales externes des extrémités 644 et 664 des pattes glissent sur les deuxièmes surfaces 2084 des crans 208 jusqu'à ce que la vis soit serrée dans le taraudage 41.

Comme les pattes 64 et 66 sont déformées élastiquement en rapprochant temporairement les parties 649 et 669 des bords 5443 et 5446, pour mettre en place la bague 60 dans le lamage 202, les extrémités libres 644 et 664 sont rabattues, sous l'effet de l'élasticité des pattes 64 et 66, vers les crans 208.

Si la vis 50 tend à se dévisser par rapport à l'excentrique 4, dans le sens de la flèche F₂ à la figure 5, alors l'un des bords libres 643 et 663 des pattes 64 et 66 vient, sous l'effet de l'élasticité des pattes 64 et 66, en appui contre la surface 2082 d'un des crans 208, dont l'inclinaison bloque alors la rotation de la bague 60, et donc de la vis 50, dans le sens de desserrage.

En d'autres termes, une fois mise en place dans le lamage 202, la bague 60 autorise une rotation de la vis 50 autour de l'axe X₂₀₄ dans un sens de vissage de cette vis selon la flèche F₁ à la figure 5, mais bloque son dévissage dans le sens de la flèche F₂.

Dans le cas de l'exemple représenté où cinquante crans 208 sont régulièrement répartis sur le bord 206, l'angle entre deux crans 208 est de 7,2°, ce qui correspond à la course de desserrage maximale de la vis 50 avant que l'un des bords 643 ou 663 vienne en appui bloquant contre l'une des surfaces 2082.

Le fait que les longueurs L₆₄ et L₆₆ sont différentes induit que les bords libres 643 et 663 des pattes 64 et 66 sont amenés en appui bloquant contre l'une des premières faces 2082 d'un des crans 208 pour des rotations d'amplitudes angulaires différentes de la vis 50 autour de l'axe X₂₀₄, ce qui limite d'autant plus la course angulaire de dévissage potentiel de la vis, avant que celle-ci ne soit bloquée par l'interaction de la bague 60 et d'un cran 208.

Comme il ressort plus particulièrement de la figure 6, l'épaulement 58 vient en appui, par sa surface 582 opposée à la tête 54, contre la rampe en acier 22, de sorte que, moyennant un choix appropriée de l'épaisseur e₂₀ du lamage 202 et de la hauteur axiale H₅₈ de l'épaulement 58, on ne risque pas d'écraser ou de déformer plastiquement le capot 20 lors du serrage de la vis 50. Ce capot peut donc être réalisé en matériau plastique. Ainsi, l'épaulement 58 permet d'appliquer l'effort de serrage dû à la vis 50 uniquement sur des pièces massives telles que la rampe 22 et l'excentrique 4. La présence de l'épaulement 58 induit que l'effort de pincement du capot 20 entre la face 546 de la tête 54 et la rampe 22 est relativement modéré, de même que l'effort de pincement de la partie annulaire 62 de la bague 60 entre la face 546 de la tête 54 et le fond du lamage 202. La bague 60 n'est donc que « pincée », sans être déformée.

L'assemblage obtenu grâce à la vis 50 et à la bague 60 est réversible dans la mesure où il est possible d'agir sur les parties 649 et 669 des pattes 64 et 66 pour les dégager des crans 208 en les rabattant vers l'axe X₅₀, par exemple au moyen d'un tournevis, lorsqu'on exerce un effort de dévissage de la bague 60.

Le dispositif d'assemblage de l'invention permet d'obtenir une grande fiabilité du maintien en position serrée de la vis 50, sans être influencé par les vibrations et sans dépendre des coefficients de frottement entre la tête de la vis et la surface sur laquelle elle vient en appui. Il n'est pas nécessaire d'avoir recours à des rivets et à une presse de rivetage pour réaliser l'assemblage. Comme les pattes 64 et 66 sont disposées, le long de l'axe X₅₀, au même niveau que la tête 54, elles n'allongent pas la longueur de la vis 50, de sorte que la division du métier, c'est-à-dire l'épaisseur du volume dévolu à chaque lame qui est égale à l'épaisseur des cadres de lisses, de l'ordre de 10 ou 12 mm, peut être respectée.

Les hauteurs H₆₄ et H₆₆ sont en pratique légèrement inférieures à la hauteur H₅₄ afin de limiter les risques d'accrochage d'une lame voisine en cours de fonctionnement de la ratière.

Comme la géométrie de la tête 54 est inscrite dans le cercle C₅₀, les pattes 64 et 66, qui sont courbées vers l'intérieur de ce cercle en configuration d'utilisation d'un dispositif 40, n'augmentent pas sensiblement l'encombrement radial de la vis. Comme la clé mâle n'interagit pas avec la périphérie 544 de la tête 54, la manoeuvre de la vis au moyen d'une clef mâle ne risque pas d'endommager les pattes 64 et 66 et les pattes peuvent s'étendre sur une hauteur H₆₄ ou H₆₆ relativement importante par rapport à la hauteur H₅₄, à savoir plus de 50% et de préférence plus de 70%, ce qui confère de bonnes propriétés mécaniques à ces pattes qui résistent efficacement aux efforts de flexion et de flambage qu'elles subissent.

Comme la longueur L₆₄ ou L₆₆ des pattes est relativement importante par rapport au diamètre du cercle C₅₀, les contraintes de flexion sur ces pattes sont peu intenses. Ceci peut être rapproché du fait que les parties 649 et 669 s'étendent sur environ la moitié de la longueur des pattes 64 et 66.

Selon une variante non représentée de l'invention, les pattes 64 et 66 peuvent être courbées plastiquement vers les bords 5443 et 5446 lors de la mise en place de la bague 60 sur la vis 50. Cette courbure préalable des pattes est telle que celles-ci doivent être encore plus courbées, de façon élastique, lors de leur mise en place dans le lamage.

Selon une autre variante non représentée de l'invention, les parties 648 et 668 des pattes 64 et 66 ne sont pas en appui contre les bords 5444 et 5445 mais disposées en regard et à distance de ces bords, selon une direction radiale par rapport à l'axe X₅₀. Dans ce cas, les deux parties 648 et 649, 668 et 669 de chaque patte sont susceptibles de se rapprocher/s'éloigner d'un des bords latéraux unitaires 5443 à 5446, selon une direction radiale par rapport au bord en regard duquel elles sont montées, grâce à une déformation élastique des pattes 64 et 66. Cette construction permet d'utiliser la flexion des pattes 64 et 66 sur une longueur importante, pratiquement égale à la longueur L₆₄ ou L₆₆, alors que le blocage en rotation de la bague 60 sur la vis 50 est assuré par la coopération de formes entre l'épaulement 58 et le bord de l'ouverture 63.

L'empreinte 56 de la tête 54 peut avoir une section transversale autre qu'hexagonale, par exemple en étoile à six branches ou carrée, pour autant qu'elle permet d'entraîner la vis 50 en rotation autour de l'axe X₅₀.

Comme représenté à la figure 1, l'invention peut également être utilisée pour fixer sur l'excentrique 4, au moyen de deux dispositifs d'assemblage 40 conformes l'invention, des plaques 24 formant chacune une dent 26 destinée à coopérer avec un bras mobile 28 lui-même articulé sur la bielle autour d'un axe X₂₈. Un capot 30 retient le bras 28 sur la bielle 6, avec possibilité de rotation autour de cet axe. Ce capot 30 est monté sur la bielle au moyen de deux dispositifs d'assemblage 40 conformes à l'invention. Des lamages analogues au lamage 202 sont prévus sur les pièces 24 et 30.

L'invention n'est pas limitée aux modes de réalisation décrits ci-dessus et différentes variantes peuvent être envisagées par l'homme du métier. Par exemple, la bague 60 peut comprendre une seule patte élastiquement déformable, du type des pattes 64 ou 66, ou plus de deux pattes élastiquement déformables. En variante aux chanfreins 646 et 666 prévus sur les pattes 64 et 66, un chanfrein avec la même fonction peut être prévu sur le haut des crans 208.

## Revendications

1. Dispositif d'assemblage (40) d'au moins deux pièces (4, 20, 22) constitutives d'une machine de formation de foule (2), ce dispositif comprenant une vis (50) pourvue d'une tige filetée (52) et d'une tête (54) comprenant au moins une paire de deux bords latéraux adjacents (5443-5446) formant entre eux un angle (α₁, α₂) non plat, **caractérisé en ce que** :
- la tête (54) est pourvue d'une empreinte creuse (56) de réception d'un outil d'entraînement de la vis en rotation et
- une bague de blocage (60) est montée autour de la vis (50) et comprend une partie annulaire (62) en appui contre une face (546) de la tête orientée vers la tige (52), ainsi qu'au moins une patte (64, 66) dont une première partie (648, 668) est en regard d'un premier bord (5444, 5445) de la paire de bords (5443-5446), selon une direction radiale par rapport à un axe central (X₅₀) de la vis, et dont une deuxième partie (649, 669) est en regard du deuxième bord (5443, 5446) de la paire de bords, selon une direction radiale par rapport à l'axe central (X₅₀) de la vis, cette deuxième partie (649, 669) de la patte (64, 66) étant apte à se rapprocher (F₀) ou à s'éloigner du deuxième bord (5443, 5446) de la paire de bords, grâce à une déformation élastique de la patte.

2. Dispositif selon la revendication 1, **caractérisé en ce que** la hauteur axiale (H₆₄, H₆₆) de la patte, prise parallèlement à l'axe central (X₅₀) de la vis (50), a une valeur supérieure à 50%, de préférence supérieure à 70%, de la valeur de la hauteur axiale (H₅₄) de la tête (54), prise parallèlement à l'axe central de la vis.

3. Dispositif selon l'une des revendications précédentes, **caractérisé en ce que** la tête (54) est pourvue d'au moins deux paires de deux bords adjacents (5443-5446) formant entre eux un angle (α₁, α₂) non plat, et **en ce que** la bague de blocage (60) est pourvue d'au moins deux pattes (64, 66) élastiquement déformables aptes à venir respectivement en appui, par leurs premières parties (648, 668), contre des premiers bords (5444, 5445) des paires de bords et dont les deuxièmes parties (649, 669) sont disposées radialement en regard des deuxièmes bords (5443, 5446) des paires de bords et aptes à se rapprocher où à s'éloigner de ces deuxièmes bords (5443, 5446) par déformation élastique des pattes.

4. Dispositif selon la revendication 3, **caractérisé en ce que** les deux pattes (64, 66) ont des longueurs (L₆₄, L₆₆) différentes.

5. Dispositif selon l'une des revendications précédentes, **caractérisé en ce que** la première partie (648, 668) de la ou chaque patte (64, 66) est en appui contre le premier bord (5444, 5445) de la ou d'une des paire(s) de bords (5443-5446).

6. Dispositif selon l'une des revendications précédentes, **caractérisé en ce qu'**un épaulement (58) est ménagé autour de la tige (52), sur le côté de la tête (54) tourné vers la tige, et **en ce que** la bague de blocage (60) est montée autour de cet épaulement.

7. Dispositif selon l'une des revendications précédentes, **caractérisé en ce que** la première partie (648, 668) de chaque patte (64, 66) de blocage (60) forme, avec une face (622) de partie annulaire (62) tournée vers cette patte (64, 66), un angle (β) inférieur à 90°.

8. Dispositif selon la revendication 7, **caractérisé en ce que** le premier bord (5444-5445) de chaque paire de bords (5443-5446) est en dépouille (δ) et converge vers l'axe central (X₅₀) de la vis (50) à l'opposé de la tige (52).

9. Dispositif selon l'une des revendications précédentes, **caractérisé en ce que** l'extrémité libre (644, 664) de la ou chaque patte (64, 66) est pourvue d'un chanfrein (646, 666), du côté de cette extrémité tournée vers la partie annulaire (62).

10. Ensemble d'au moins deux pièces (4, 20, 22, 24, 30) assemblées par un dispositif (40) selon l'une des revendications précédentes dans lequel l'une des pièces (20, 24, 30) est équipée d'un lamage (202) de réception de la tête (54) et de la bague de blocage (60) et en ce que le bord périphérique (206) du lamage est pourvu de crans (208) recevant en appui une patte élastiquement déformable (64, 66).

11. Ensemble selon la revendication 10, **caractérisé en ce qu'**une première face (2082) de chaque cran (208) est apte à recevoir en appui bloquant un bord libre (643, 663) de la ou de chaque patte (64, 66) lorsque la vis (50) tourne dans un sens (F₂) de dévissage par rapport à la pièce (20, 24, 30) équipée du lamage (202).

12. Lame (2) de machine de formation de la foule comprenant au moins un ensemble de pièces assemblées (4, 20, 22, 24, 30) selon l'une des revendications 10 ou 11.

## Claims

1. A fastener device (40) for assembling together at least two component parts (4, 20, 22) of a shed-forming machine (2), the device comprising a screw (50) having a threaded shank (52) and a head (54) having at least one pair of two adjacent sides (5443-5446) forming a non-flat angle (α₁, α₂) between them, the device being **characterized in that**:
• the head (54) is provided with a socket (56) for receiving a tool for driving the screw in rotation; and
• a lock ring (60) is mounted around the screw (50) and comprises an annular portion (62) bearing against a face (546) of the head that is facing towards the shank (52), together with at least one tab (64, 66) having a first portion (648, 668) facing a first side (5444, 5445) of a pair of sides (5443-5446) in a radial direction relative to a central axis (X₅₀) of the screw, and having a second portion (649, 669) facing the second side (5443, 5446) of the pair of sides in a radial direction relative to the central axis (X₅₀) of the screw, said second portion (649, 669) of the tab (64, 66) being suitable for moving towards (F₀) or away from the second side (5443, 5446) of the pair of sides by elastic deformation of the tab.

2. A device according to claim 1, **characterized in that** the axial height (H₆₄, H₆₆) of the tab measured parallel to the central axis (X₅₀) of the screw (50) has a value that is greater than 50%, preferably greater than 70%, of the value of the axial height (H₅₄) of the head (54) measured parallel to the central axis of the screw.

3. A device according to any preceding claim, **characterized in that** the head (54) is provided with at least two pairs of two adjacent sides (5443-5446) forming non-flat angles (α₁, α₂) between them, and **in that** the lock ring (60) is provided with at least two elastically-reformable tabs (64, 66) suitable for respectively bearing, via their first portions (648, 668), against first sides (5444, 5445) of the pairs of sides, and having second portions (649, 669) disposed radially facing second sides (5443, 5446) of the pairs of sides and suitable for moving towards or away from said second sides (5443, 5446) by elastic deformation of the tabs.

4. A device according to claim 3, **characterized in that** the two tabs (64, 66) are of different lengths (L₆₄, L₆₆).

5. A device according to one of the preceding claims, **characterized in that** the first portion (648, 668) of the or each tab (64, 66) bears against the first side (5444, 5445) of the or each pair of sides (5443-5446).

6. A device according to one of the preceding claims, **characterized in that** a shoulder (58) is formed around the shank (52) on the side of the head (54) that faces towards the shank, and **in that** the lock ring (60) is mounted around said shoulder.

7. A device according to one of the preceding claims, **characterized in that** the first portion (648, 668) of each tab (64, 66) of the lock ring (60) forms an angle (β) relative to a face (622) of the annular portion (62) facing said tab (64, 66), where the angle (β) is less than 90°.

8. A device according to claim 7, **characterized in that** the first side (5444-5445) of each pair of sides (5443-5446) is tapered (δ), converging towards the central axis (X₅₀) of the screw (50) away from the shank (52).

9. A device according to one of the preceding claims, **characterized in that** the free end (644, 664) of the or each tab (64, 66) is provided with a chamfer (646, 666) on the side of said end facing towards the annular portion (62).

10. An assembly of at least two parts (4, 20, 22, 24, 30) assembled together by a device (40) according to one of the preceding claims, wherein one of the parts (20, 24, 30) is provided with a setback (202) for receiving the head (54) and the lock ring (60), and in that the peripheral side (206) of the setback is provided with serrations (208) receiving an elastically-deformable tab (64, 66) pressed thereagainst.

11. An assembly according to claim 10, **characterized in that** a first face (2082) of each serration (208) is suitable for receiving a free side (643, 663) of the or each tab (64, 66) in locking thrust thereagainst when the screw (50) turns in an unscrewing direction (F₂) relative to the part (20, 24, 30) fitted with the setback (202).

12. A heald frame lifting unit (2) for a shed-forming machine, the heald frame lifting unit comprising at least one assembly of assembled-together parts (4, 20, 22, 24, 30) according to claim 10 or claim 11.

## Patentansprüche

1. Vorrichtung (40) zum Zusammensetzen von mindestens zwei Bestandteilen (4, 20, 22) einer Maschine (2) zur Fachbildung, wobei die Vorrichtung eine Schraube (50) umfasst, die mit einem Gewindeschaft (52) und einem mindestens ein Paar von zwei benachbarten Seitenrändern (5443-5446) aufweisenden Kopf (54) versehen ist, wobei die Seitenränder zueinander einen nicht flachen Winkel (α₁, α₂) bilden, **dadurch gekennzeichnet, dass**
- der Kopf (54) mit einer hohlen Vertiefung (56) zur Aufnahme eines Werkzeugs zum Drehen der Schraube versehen ist und
- ein Sperrring (60) um die Schraube (50) herum montiert ist, der einen an einer zu dem Schaft (52) gerichteten Fläche (546) des Kopfes anliegenden Ringbereich (62) sowie mindestens ein Band (64, 66) umfasst, von dem ein erster Bereich (648, 668) einem ersten Rand (5444, 5445) des Paares von Rändern (5443 - 5446) gemäß einer radialen Richtung in Bezug auf die Mittelachse (X₅₀) der Schraube gegenübersteht, und von dem ein zweiter Bereich (649, 669) dem zweiten Rand (5443, 5446) des Paares von Rändern gemäß einer radialen Richtung in Bezug auf die Mittelachse (X₅₀) der Schraube gegenübersteht, wobei dieser zweite Bereich (649, 669) des Bandes (64, 66) geeignet ist, sich dem zweiten Rand (5443, 5446) des Paares von Rändern dank einer elastischen Verformung des Bandes zu nähern (F₀) oder von jenem zu entfernen.

2. Vorrichtung nach Anspruch 1, **dadurch gekennzeichnet, dass** die axiale Höhe (H₆₄, H₆₆) des Bandes, parallel zur Mittelachse (X₅₀) der Schraube (50) genommen, einen Wert größer als 50%, vorzugsweise größer als 70% des Wertes der axialen Höhe (H₅₄) des Kopfes (54), parallel zur Mittelachse der Schraube genommen, aufweist.

3. Vorrichtung nach einem der vorhergehenden Ansprüche, **dadurch gekennzeichnet, dass** der Kopf (54) mit mindestens zwei Paaren von benachbarten Rändern (5443-5446) versehen ist, die zwischen sich einen nicht flachen Winkel (α₁, α₂) bilden, und dass der Sperrring (60) mit mindestens zwei elastisch verformbaren Bändern (64, 66) versehen ist, die geeignet sind, jeweils mit ihren ersten Bereichen (648, 668) an ersten Rändern (5444, 5445) der Paare von Rändern anzuliegen, und deren zweite Bereiche (649, 669) radial gegenüberliegend zu zweiten Rändern (5443, 5446) der Paare von Rändern angeordnet sind und geeignet sind, sich diesen zweiten Rändern (5443, 5446) durch elastische Verformung der Bänder zu nähern oder von diesen zu entfernen.

4. Vorrichtung nach Anspruch 3, **dadurch gekennzeichnet, dass** die zwei Bänder (64, 66) unterschiedliche Längen (L₆₄, L₆₆) aufweisen.

5. Vorrichtung nach einem der vorhergehenden Ansprüche, **dadurch gekennzeichnet, dass** der erste Bereich (648, 668) des oder jedes Bandes (64, 66) gegen den ersten Rand (S444, 5445) des oder jedes Paares von Rändern (5443-5446) anliegt.

6. Vorrichtung nach einem der vorhergehenden Ansprüche, **dadurch gekennzeichnet, dass** eine Schulter (58) um den Schaft (52) auf der zu dem Schaft gerichteten Seite des Kopfes (54) angeordnet ist und dass der Sperrring (60) um diese Schulter herum montiert ist.

7. Vorrichtung nach einem der vorhergehenden Ansprüche, **dadurch gekennzeichnet, dass** der erste Bereich (648, 668) jedes Bandes (64, 66) zur Blockierung (60) mit einer teilweise ringförmigen (62) Fläche (622), die zu diesem Band (64, 66) gerichtet ist, einen Winkel (β) kleiner als 90° bildet.

8. Vorrichtung nach Anspruch 7, **dadurch gekennzeichnet, dass** der erste Rand (5444 - 5445) jedes Paares von Rändern (5443 - 5446) sich verjüngt (δ) und zur Mittelachse (X₅₀) der Schraube (50) entgegengesetzt zum Schaft (52) konvergiert.

9. Vorrichtung nach einem der vorhergehenden Ansprüche, **dadurch gekennzeichnet, dass** das freie Ende (644, 654) des oder jedes Bandes (64, 66) mit einer Schräge (646, 666) an der Seite dieses Endes, das zu dem Ringbereich (62) gerichtet ist, versehen ist.

10. Anordnung aus mindestens zwei von einer Vorrichtung (40) nach einem der vorhergehenden Ansprüche zusammengesetzten Teilen (4, 20, 22, 24, 30), bei der eines der Teile (20, 24, 30) mit einer Senkung (202) zur Aufnahme des Kopfes (54) und des Sperrringes (60) ausgerüstet ist und bei dem der Umfangsrand (206) der Senkung mit Rastzacken (208) versehen ist, die in Auflage ein elastisch deformierbares Band (64, 66) aufnehmen.

11. Anordnung nach Anspruch 10, **dadurch gekennzeichnet, dass** eine erste Fläche (2082) jeder Rastzacke (208) geeignet ist, in blockierender Abstützung einen freien Rand (643, 663) des oder jedes Bandes (64, 66) aufzunehmen, wenn die Schraube (15) in eine Richtung (F₂) des Lösens in Bezug auf das mit der Einsenkung (202) ausgerüsteten Teil (20, 24, 30) gedreht wird.

12. Webschaft (2) der Maschine zur Fachbildung, mindestens eine Anordnung zusammengesetzter Teile (4, 20, 22, 24, 30) nach einem der Ansprüche 10 oder 11 umfassend.
